# FASCICULE DE BREVET EUROPEEN

(11) **EP 4 015 302 B1**
(45) Date de publication et mention de la délivrance du brevet: **29.11.2023**
(21) Numéro de dépôt: 21214286.3
(22) Date de dépôt: 14.12.2021
(51) Int. Cl.: B60N 2/70, B60N 2/72, B60N 2/68

(54) **NAPPE DE SUSPENSION ALLÉGÉE À MONTAGE SIMPLIFIÉ**
LEICHTERE AUFHÄNGUNGSMATTE MIT VEREINFACHTER MONTAGE
LIGHTWEIGHT SUSPENSION SHEET WITH SIMPLIFIED ASSEMBLY

(30) Priorité: 21.12.2020 FR 2013780
(43) Date de publication de la demande: 22.06.2022
(73) Titulaire: Renault s.a.s, 92100 Boulogne Billancourt (FR)
(72) Inventeur: BARRIERE, Hervé, 28410 Saint Lubin de la Haye (FR); REMACLE, HENRI, 93330 Neuilly sur Marne (FR); SOUVILLE, Philippe, 78180 Montigny le Bretonneux (FR); LECLERC, Jean-Philippe, 28130 Houx (FR)
(74) Mandataire: Renault Group

(56) Documents cités:
- EP-A1- 2 612 794
- EP-A1- 3 426 518
- DE-A1- 19 905 215
- US-A1- 2013 134 749

## Description

La présente invention concerne une nappe de suspension allégée à montage simplifié.

Une nappe de suspension est un élément qui peut se retrouver soit dans l'assise d'un siège, soit dans le dossier de celui-ci, soit dans lesdites deux parties dudit siège, et qui a pour fonction d'améliorer le confort d'un occupant qui serait assis sur ledit siège. En effet, une telle nappe permet d'assouplir la partie du siège dans laquelle elle est insérée, en permettant à cet occupant de pouvoir s'y enfoncer et de se retrouver dans une position agréable.

Actuellement, une nappe de suspension d'un dossier de siège, est un élément généralement métallique, qui est monté sur une armature de siège, sur laquelle est chaussée une matelassure de dossier. Or, une nappe de suspension métallique impose des contraintes de conception sur la matelassure et des contraintes de montage d'éléments périphériques tels que par exemple un dispositif d'airbag latéral. De plus, elle peut contribuer à transmettre des bruits parasites en provenance d'éléments générateurs de bruit et placés à proximité de ladite nappe de suspension, tels que par exemple un moteur électrique destiné à piloter l'inclinaison dudit dossier. Les documents EP 2 612 794 A1, US2013/134749 A+ et EP 3 426 518 A1 divulguent des nappes de suspension.

Une nappe de suspension selon l'invention, permet de s'affranchir de tous les inconvénients relevés dans l'état de la technique.

L'invention a pour objet une nappe de suspension d'un dossier de siège de véhicule.

Selon l'invention, la nappe de suspension comprend au moins une bande d'un film plastique surmoulée dans deux montants latéraux, lesdits deux montants latéraux présentant chacun un profil destiné à venir s'adapter au profil d'un flasque latéral d'une armature dudit dossier. Habituellement, une nappe de suspension d'un dossier est réalisée sous la forme de plusieurs fils métalliques, présentant un certain poids ayant tendance à alourdir le poids du véhicule. De plus, la fixation d'une telle nappe de suspension au dossier est compliquée, car il faut prévoir d'arrimer chacun desdits fils à l'armature dudit dossier, qui est une opération longue et fastidieuse. De plus, la présence d'une nappe de suspension sous la forme d'au moins une bande de film plastique peut facilement être insérée dans un dossier de siège, au moyen par exemple d'un surmoulage dans une matelassure dudit dossier. Une telle nappe de suspension permet de limiter la production de pièces en non-tissé, réduisant les coûts de fabrication d'un tel dossier. Il est à noter que l'armature d'un dossier est généralement bordée par deux flasques latéraux, destinés à maintenir dans une position droite le corps d'une personne qui serait assise sur le siège. Les deux montants latéraux supportant ladite au moins une bande de film en plastique d'une nappe de suspension selon l'invention, sont fabriqués en tenant compte du profil de chacun desdits deux flasques latéraux de l'armature, car ils sont destinés à venir au contact desdits flasques en épousant étroitement leur forme. Les deux montants latéraux de la nappe de suspension sont préférentiellement réalisés en polymère. De cette manière, ils présentent une bonne tenue mécanique, tout en demeurant légers. Avantageusement, la nappe de suspension comprend deux bandes parallèles et séparées de film plastique reliant les deux montants latéraux. De façon plus avantageuse, la nappe de suspension comprend trois bandes parallèles et séparées de film plastique reliant les deux montants latéraux. En effet, plus la nappe de suspension comprend de bandes de film plastique, meilleur sera le confort de la personne.

Selon une caractéristique possible de l'invention, les deux montants latéraux sont parallèles et symétriques, ladite au moins une bande de film plastique reliant lesdits deux montants latéraux. De cette manière, si la nappe de suspension possédait deux ou trois bandes de film plastique, elle définirait un réseau comprenant deux montants parallèles et au moins deux bandes de film plastique perpendiculaires auxdits deux montants latéraux.

Selon une caractéristique possible de l'invention, chaque montant latéral est représenté par une pièce creuse et allongée. Le fait que les montants soient creux, permet d'alléger le véhicule et permet de faciliter leur insertion sur les flasques latéraux de l'armature de siège.

Selon une caractéristique possible de l'invention, chaque montant latéral est délimité par trois parois, dont une première paroi est orientée vers l'intérieur de la nappe, dont une deuxième paroi est orientée vers l'extérieur de ladite nappe et dont une troisième paroi relie ladite première paroi à ladite deuxième paroi, ladite au moins une bande de film plastique reliant les premières parois des deux montants latéraux. Autrement dit, dans un plan de coupe transversal de la nappe de suspension, on trouve dans l'ordre d'abord la deuxième paroi, la troisième paroi et la première paroi du premier montant latéral. On trouve ensuite le film plastique, puis la première paroi, la troisième paroi et la deuxième paroi du deuxième montant latéral.

Selon une caractéristique possible de l'invention, la longueur de ladite au moins une bande est supérieure à la distance séparant les deux montants latéraux, de sorte que ladite au moins une bande présente un corps central rectiligne bordé par deux segments d'extrémité repliés. En effet, ladite au moins une bande de film plastique peut être amenée à venir se placer autour d'une matelassure du dossier, et lors de la fabrication de la nappe de suspension, il faut tenir compte de cette possibilité. Avantageusement, les deux segments d'extrémité sont repliés à 90° par rapport au corps central rectiligne. De façon plus générale, ladite au moins une bande est élaborée en tenant compte des caractéristiques du dossier dans lequel la nappe va être montée.

L'invention a pour autre objet un dossier d'un siège de véhicule comprenant une armature, une matelassure et une nappe de suspension conforme à l'invention.

Selon l'invention, la nappe de suspension est insérée entre une face arrière de la matelassure et l'armature. La matelassure présente une face avant contre laquelle est destiné à venir se placer le dos d'un occupant, et une face arrière apte à venir s'insérer dans l'armature. La nappe de suspension étant insérée entre la face arrière de la matelassure et l'armature, le dos d'une personne qui serait assise sur le siège possédant un tel dossier pourra bénéficier d'une certaine épaisseur de mousse avant d'atteindre le film plastique. La nappe de suspension est insérée dans le dossier de sorte que ladite au moins une bande de film plastique s'étend horizontalement et de sorte que les montants latéraux s'inscrivent dans un plan d'inclinaison du dossier par rapport à un plan vertical.

Selon une variante de réalisation de l'invention, la nappe de suspension est surmoulée dans la matelassure, l'ensemble constitué par ladite matelassure et ladite nappe de suspension étant fixé à l'armature. Chaque bande de film plastique est surmoulée dans la matelassure en étant sous tension mécanique.

Selon une caractéristique possible de l'invention, l'armature du dossier est bordée par deux flasques latéraux, les deux montants latéraux présentant le même profil que celui des deux flasques latéraux, de sorte que les deux montants latéraux viennent se fixer sur lesdits deux flasques latéraux en épousant étroitement leur forme. Les deux flasques latéraux ont tendance à venir se placer sur les deux côtés du dos d'une personne qui serait assise sur le siège possédant le dossier. Lorsque les deux montants latéraux et ladite au moins une bande de film plastique sont surmoulés dans la matelassure, ladite matelassure vient se fixer à l'armature de sorte que lesdits montants latéraux soient clipsés sur les deux flasques latéraux, chacun desdits montants latéraux venant se caler contre un flasque latéral en entourant ledit flasque latéral. Les deux flasques latéraux contribuent à maintenir dans sa position initiale sur le dossier, l'ensemble comprenant les deux montants latéraux et ladite au moins une bande de film plastique reliant lesdits deux montants.

Selon une caractéristique possible de l'invention, les deux montants latéraux sont orientés de telle manière qu'ils permettent de guider le déploiement d'un airbag inséré dans le dossier et permettent de supporter des poches de gonflage destinées au réglage de maintiens latéraux de la matelassure. Outre le fait de structurer et renforcer les bandes de film plastique, les deux montants latéraux remplissent d'autres fonctions telles que par exemple, guider le déploiement d'un airbag inséré dans le dossier lors d'un choc du véhicule contre un obstacle extérieur, et supporter des poches de gonflage pour plus ou moins mettre en relief des maintiens latéraux.

L'invention a pour autre objet un procédé de fabrication d'un dossier selon l'une l'invention.

Selon l'invention, le procédé comprend les étapes suivantes :
- Une étape de surmoulage d'au moins une bande d'un film plastique sur deux montants latéraux parallèles pour constituer une nappe de suspension,
- Une étape de surmoulage de la nappe de suspension ainsi obtenue dans une matelassure du dossier,
- Une étape de fixation de ladite nappe de suspension et de ladite matelassure dans une armature dudit dossier.

Un procédé selon l'invention permet de fabriquer à part une matelassure d'un dossier de siège, comportant une nappe de suspension incluant au moins une bande et deux montants latéraux, puis d'acheminer ladite matelassure dotée de sa nappe de suspension vers une armature de dossier où elle sera ensuite montée. Il en résulte que le procédé d'assemblage d'un dossier selon l'invention est grandement simplifié en étant notamment plus souple, car toutes les opérations nécessaires à cet assemblage n'ont pas toutes à être effectuées les unes à la suite des autres et au même endroit.

Un procédé selon l'invention permet ainsi d'obtenir trois types de garnissage de dossier de siège automobile:
- un garnissage traditionnel avec une matelassure qui vient se superposer sur la nappe de suspension, elle-même préalablement fixée sur l'armature, puis l'opération de solidarisation de la coiffe à la matelassure s'effectue,
- un garnissage mixte avec une matelassure comprenant une nappe surmoulée, la matelassure avec la nappe venant se fixer d'un seul tenant sur l'armature selon l'invention et ensuite la coiffe est solidarisée à l'ensemble,
- un garnissage « in situ » comprenant la matelassure avec une coiffe, par exemple en textile, et une nappe de suspension à l'arrière, le tout surmoulé en un seul tenant selon la technologie dite « in situ ». On obtient ainsi un sousensemble appelé coussin, et ledit sous- ensemble vient se fixer sur l'armature d'un seul tenant.

Une nappe de suspension selon l'invention présente l'avantage d'être légère et de pouvoir être fabriquée simplement et rapidement, en réduisant le nombre de pièces impliquées dans sa fabrication. Elle a de plus l'avantage de limiter le nombre de pièces non tissées, impliquant des coûts de fabrication réduits. Elle présente l'avantage de contribuer à faciliter la fabrication du dossier en remplaçant les multiples opérations de fixation des fils métalliques par une seule opération de surmoulage. Par rapport à une nappe de suspension réalisée avec des fils métalliques, une nappe de suspension selon l'invention présente l'avantage de permettre une diminution de l'épaisseur de la matelassure en raison d'une surface de contact plus élevée.

On donne ci-après, une description détaillée d'un mode de réalisation préféré d'une nappe de suspension et d'un dossier d'un siège de véhicule selon l'invention, en se référant aux figures suivantes
[Fig. 1] représente une vue en perspective éclatée d'un dossier de siège selon l'état de la technique,
[Fig. 2] représente une vue en perspective d'une nappe de suspension selon l'invention, constituée par trois bandes de film plastique surmoulées dans deux montants latéraux,
[Fig. 3] représente une vue en perspective sous un autre angle de la nappe de suspension de la figure 1,
[Fig. 4] représente une vue en perspective éclatée d'un dossier de siège selon l'invention,
[Fig. 5] représente une vue en perspective de derrière d'une matelassure d'un dossier selon l'invention et dans laquelle a été surmoulée une nappe de suspension comprenant trois bandes de film plastique surmoulées dans deux montants latéraux,
[Fig. 6] est une vue en coupe d'un dossier selon l'invention, montrant un montant latéral inséré autour d'un flasque latéral d'une armature dudit dossier.

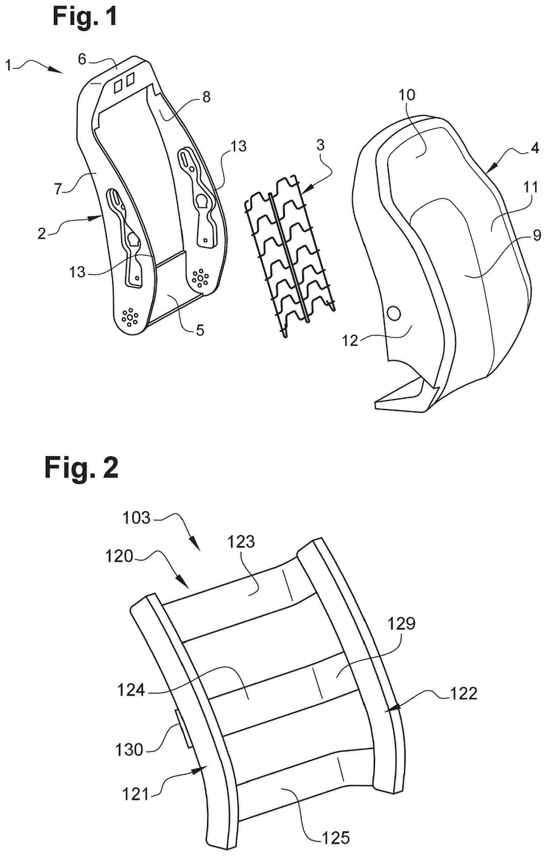

En se référant à la figure 1, un dossier 1 d'un siège selon l'état de la technique comprend une armature 2, une nappe de suspension 3 et une matelassure 4. L'armature 2 se présente sous la forme d'un cadre de forme sensiblement rectangulaire, et lorsque le dossier 1 est dans une position fonctionnelle, c'est-à-dire légèrement incliné vers l'arrière par rapport à une direction verticale, les deux côtés courts 5, 6 s'étendent horizontalement et les deux cotés allongés 7, 8 s'étendent en étant légèrement inclinés vers l'arrière par rapport à une direction verticale. Les deux côtés allongés sont matérialisés par deux flasques 7, 8 plans et de faible épaisseur, typiquement inférieure à 1cm, s'inscrivant dans deux plans parallèles. Ces deux flasques 7, 8 présentent chacun un bord avant 13 incurvé. La nappe de suspension 3 se présente sous la forme d'un réseau de fils métalliques, comprenant trois fils principaux parallèles et allongés, et une pluralité de fils secondaires parallèles et transversaux, croisant lesdits fils principaux en étant perpendiculaires à ceux-ci. La matelassure 4 est composée de quatre parties principales :
- une paroi centrale 9 contre laquelle est destiné à venir en appui le dos d'un occupant qui serait assis sur le siège comprenant le présent dossier 1,
- une paroi supérieure 10 placée au-dessus de la ladite paroi centrale 9 et faisant office d'appui-tête,
- deux parois de maintien 11, 12 bordant latéralement la paroi principale 9 et permettant de maintenir le dos de l'occupant dans une position droite, en évitant notamment qu'il ne glisse sur les côtés dudit dossier 1.

De cette manière, la matelassure 4 comprend une face avant incluant la paroi principale 9, la paroi supérieure 10 et les deux parois de maintien 11, 12 latérales, ladite face avant étant destinée à accueillir le dos de l'occupant. Cette matelassure 4 comprend également une face arrière qui est sensiblement parallèle à la face avant et qui est destinée à venir se placer au fond de l'armature 2.

La nappe de suspension filaire 3 est accrochée à l'armature 2 au moyen de l'insertion de crochets de ladite nappe 3 dans des trous de ladite armature 2. Lorsque la matelassure 4 est ensuite montée sur l'ensemble constitué par l'armature 2 et la nappe de suspension 3, ladite nappe de suspension 3 vient en appui contre la face arrière de ladite matelassure.

Or, une nappe de suspension 3 métallique et filaire présente plusieurs inconvénients :
- c'est une pièce qui n'est pas uniforme, et le contact certes indirect, du dos de l'occupant contre les fils métalliques de la nappe de suspension n'est pas agréable,
- elle nécessite des coûts de fabrication élevés, en raison du nombre et de la forme spécifique des différents fils métalliques la constituant,
- elle alourdit le dossier 1, qui va à l'encontre de la tendance actuelle tendant à alléger les véhicules.

Afin de remédier à tous ces inconvénients, en se référant aux figures 2 à 6, un dossier 100 d'un siège de véhicule selon l'invention met en oeuvre une nappe de suspension 103 sous la forme d'au moins une bande 120 d'un film plastique, qui va être surmoulé dans la matelassure 104 dudit dossier 100. Dans l'exemple considéré, la nappe de suspension 103 comprend trois bandes 123, 124, 125 de film plastique.

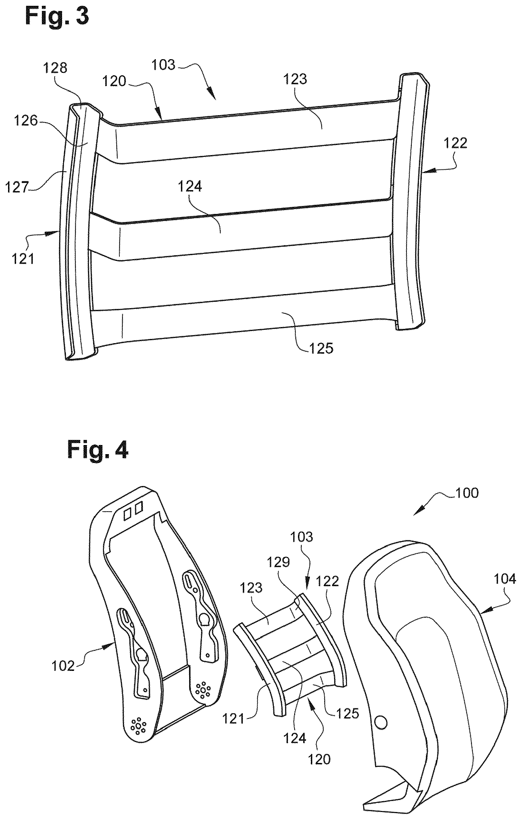

Plus précisément, en se référant aux figures 2 et 3, la nappe de suspension 103 comprend deux montants latéraux 121, 122, préférentiellement réalisés en polymère, et trois bandes plastiques séparées 123, 124, 125 reliant lesdits deux montants latéraux 121, 122. Les trois bandes 123, 124, 125 sont parallèles et séparées, le terme « séparées » signifiant que deux bandes consécutives 123, 124, 125 ménagent entre elle un espace. Avantageusement, ces trois bandes 123, 124, 125 ont la même largeur.

En se référant aux figures 2, 3, 4 et 5, chaque montant latéral 121, 122 est une pièce incurvée ayant la même courbure que le bord avant 13 des deux flasques 7, 8 de l'armature 102.

En se référant aux figures 2 et 3, chaque montant latéral 121, 122 est délimité par trois parois planes 126, 127, 128, dont une première paroi 126 et une deuxième paroi 127 qui sont légèrement divergentes, et dont une troisième paroi 128 relie ladite première paroi 126 à ladite deuxième paroi 127. De cette manière, chaque montant latéral à une section transversale en forme de U légèrement divergente.

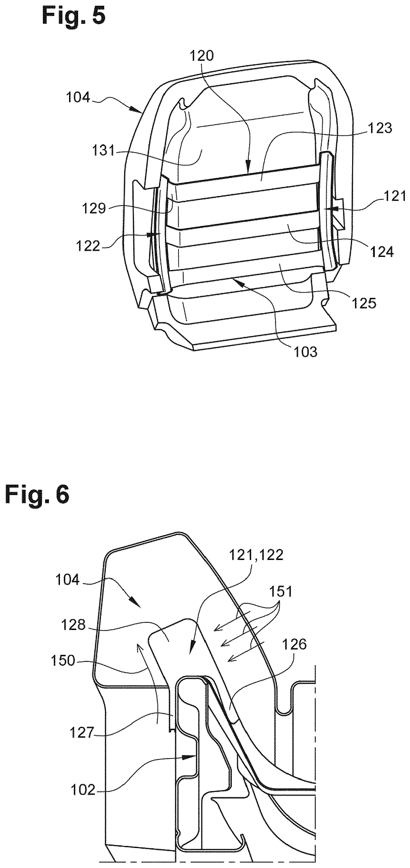

En se référant aux figures 2, 3, 4 et 5, les trois bandes plastiques 123, 124, 125 ont chacune une forme rectangulaire et relient les deux montants latéraux 121, 122 de sorte que leur axe longitudinal soit sensiblement perpendiculaire auxdits deux montants latéraux 121, 122. Les trois bandes plastiques 123, 124, 125 sont surmoulées dans les deux montants latéraux 121, 122 de sorte que lesdites trois bandes 123, 124, 125 relient les premières parois 126 desdits deux montants latéraux 121, 122. De cette manière, dans un plan de coupe perpendiculaire aux deux montants latéraux 121, 122 en partant d'une extrémité, nous trouverions dans l'ordre, la deuxième paroi 127, la troisième paroi 128 et la première paroi 126 d'un montant latéral 121, 122, puis une bande plastique 123, 124, 125, et enfin la première paroi 126, la troisième paroi 128 et la deuxième paroi 127 de l'autre montant latéral 121, 122. Chaque bande plastique 123, 124, 125 présente deux bords 129, 130 d'extrémité repliés à angle droit, pour permettre de placer une partie saillante 131 de la matelassure 103 entre lesdits deux bords 129, 130 d'extrémité comme le montre la figure 5.

Un procédé de fabrication d'un dossier 100 selon l'invention, comprend les étapes suivantes :
- une étape de surmoulage des trois bandes plastiques 123, 124, 125 sur les deux montants latéraux 121, 123 pour constituer une nappe de suspension 103,
- une étape de surmoulage de la nappe de suspension 103 ainsi obtenue dans la matelassure 104, de sorte que ladite nappe 103 se retrouve contre la face arrière de ladite matelassure 104,
- une étape de positionnement de la matelassure 104 sur l'armature 102, de sorte que chaque montant latéral 121, 122 vienne se fixer de part et d'autre du bord avant 13 des deux côtés allongés 7, 8 de ladite armature 102. En effet, chaque montant latéral 121, 122 ayant la même courbure que celle dudit bord avant 13, vient épouser idéalement la forme de ce bord avant 13 sans créer de jeu avec celui-ci. Chaque montant latéral 121, 122 est clipsé sur le bord avant 13, de sorte que la première paroi 126 et la deuxième paroi 127 se retrouvent de chaque côté dudit bord avant 13 comme l'indique la figure 3, ladite deuxième paroi 127 étant orientée vers l'extérieur du dossier 100, tandis que la première paroi 126 étant orientée vers l'intérieur dudit dossier 100,
- une étape de fixation de la matelassure 104 sur l'armature 102.

Une fois que la matelassure 104 a été fixée à l'armature 102, les deuxièmes parois 127 qui sont orientées vers l'extérieur du dossier 100, vont permettre de guider le déploiement d'un airbag lors d'un choc accidentel d'un véhicule comportant un siège doté d'un dossier 100 selon l'invention. Le déploiement est matérialisé par la flèche 150. Les premières parois 126, qui sont orientées vers l'intérieur du dossier 100, supportent des poches gonflables destinées au réglage de maintiens latéraux de la matelassure 104 en faisant plus ou moins saillir desdits maintiens latéraux comme l'indiquent les flèches 151.

## Revendications

1. Nappe de suspension (3, 103) d'un dossier (1, 100) de siège de véhicule, comprenant au moins une bande (120, 123, 124, 125) d'un film plastique fixée à deux montants latéraux (121, 122), lesdits deux montants latéraux (121, 122) présentant chacun un profil destiné à venir s'adapter au profil d'un flasque (7, 8) latéral d'une armature (102) dudit dossier (1, 100), **caractérisée en ce que** ladite bande (120, 123, 124, 125) est surmoulée dans les deux montants latéraux (121, 122).

2. Nappe de suspension selon la revendication 1, **caractérisée en ce que** les deux montants latéraux (121, 122) sont parallèles et symétriques, et **en ce que** ladite au moins une bande (120, 123, 124, 125) de film plastique relie chacun desdits deux montants latéraux (121, 122).

3. Nappe de suspension selon l'une quelconque des revendications 1 ou 2, **caractérisée en ce que** chaque montant latéral (121, 122) est représenté par une pièce creuse et allongée.

4. Nappe de suspension selon la revendication 3, **caractérisée en ce que** chaque montant latéral (121, 122) est délimité par trois parois (126, 127, 128), dont une première paroi (126) est orientée vers l'intérieur de la nappe, dont une deuxième paroi (127) est orientée vers l'extérieur de ladite nappe (103) et dont une troisième paroi (128) relie ladite première paroi (126) à ladite deuxième paroi (127), et **en ce que** ladite au moins une bande (120, 123, 124, 125) de film plastique relie les premières parois (126) des deux montants latéraux (121, 122).

5. Nappe de suspension selon l'une quelconque des revendications 1 à 4, **caractérisée en ce que** la longueur de ladite au moins une bande (120, 123, 124, 125) est supérieure à la distance séparant les deux montants latéraux (121, 122), de sorte que ladite au moins une bande (120, 123, 124, 125) présente un corps central rectiligne bordé par deux segments d'extrémité (129, 130) repliés.

6. Dossier (1, 100) d'un siège de véhicule comprenant une armature (2, 102), une matelassure (4, 104) et une nappe de suspension (3, 103) conforme à l'une quelconque des revendications 1 à 5, **caractérisé en ce que** la nappe de suspension (103) est insérée entre une face arrière (131) de la matelassure (104) et l'armature (102).

7. Dossier selon la revendication 6, **caractérisé en ce que** la nappe de suspension (103) est surmoulée dans la matelassure (104), et **en ce que** l'ensemble constitué par ladite matelassure (104) et ladite nappe de suspension (103) est fixé à l'armature (102).

8. Dossier selon l'une quelconque des revendication 6 à 7, **caractérisé en ce que** l'armature (102) du dossier (100) est bordée par deux flasques latéraux (7, 8), et **en ce que** les deux montants latéraux (121, 122) présentent le même profil que celui des deux flasques latéraux (7, 8), de sorte que les deux montants latéraux (121, 122) viennent se fixer sur lesdits deux flasques latéraux (7, 8) en épousant étroitement leur forme.

9. Dossier selon l'une quelconque des revendications 6 à 9, **caractérisé en ce que** les deux montants latéraux (121, 122) sont orientés de telle manière qu'ils permettent de guider le déploiement d'un airbag inséré dans le dossier (100) et permettent de supporter des poches de gonflage destinés au réglage de maintiens latéraux de la matelassure (104).

10. Procédé de montage d'un dossier (100) selon l'une quelconque des revendications 1 à 9, **caractérisé en ce qu'**il comprend les étapes suivantes :
- Une étape de surmoulage d'au moins une bande (120, 123, 124, 125) d'un film plastique sur deux montants latéraux (121, 122) parallèles pour constituer une nappe de suspension (103),
- Une étape de surmoulage de la nappe de suspension (103) ainsi obtenue dans une matelassure (104) du dossier (100),
- Une étape de fixation de ladite nappe de suspension (103) et de ladite matelassure (104) dans une armature (102) dudit dossier (100).

## Patentansprüche

1. Aufhängungsmatte (3, 103) einer Rückenlehne (1, 100) eines Fahrzeugsitzes, welche mindestens einen Streifen (120, 123, 124, 125) einer Kunststofffolie umfasst, der an zwei seitlichen Stützen (121, 122) befestigt ist, wobei die zwei seitlichen Stützen (121, 122) jeweils ein Profil aufweisen, das dazu bestimmt ist, sich an das Profil eines Seitenbleches (7, 8) eines Beschlages (102) der Rückenlehne (1, 100) anzupassen, **dadurch gekennzeichnet, dass** der Streifen (120, 123, 124, 125) in die zwei seitlichen Stützen (121, 122) eingeformt ist.

2. Aufhängungsmatte nach Anspruch 1, **dadurch gekennzeichnet, dass** die zwei seitlichen Stützen (121, 122) parallel und symmetrisch sind, und dadurch, dass der mindestens einen Streifen (120, 123, 124, 125) aus Kunststofffolie jede der zwei seitlichen Stützen (121, 122) verbindet.

3. Aufhängungsmatte nach einem der Ansprüche 1 oder 2, **dadurch gekennzeichnet, dass** jede seitliche Stütze (121, 122) durch ein hohles und lang gestrecktes Teil verkörpert wird.

4. Aufhängungsmatte nach Anspruch 3, **dadurch gekennzeichnet, dass** jede seitliche Stütze (121, 122) von drei Wänden (126, 127, 128) begrenzt wird, von denen eine erste Wand (126) zum Inneren der Matte weist, von denen eine zweite Matte (127) zur Außenseite der Matte (103) weist und von denen eine dritte Wand (128) die erste Wand (126) mit der zweiten Wand (127) verbindet, und dadurch, dass der mindestens einen Streifen (120, 123, 124, 125) aus Kunststofffolie die ersten Wände (126) der zwei seitlichen Stützen (121, 122) verbindet.

5. Aufhängungsmatte nach einem der Ansprüche 1 bis 4, **dadurch gekennzeichnet, dass** die Länge des mindestens einen Streifens (120, 123, 124, 125) größer als der Abstand ist, der die zwei seitlichen Stützen (121, 122) trennt, und zwar derart, dass der mindestens eine Streifen (120, 123, 124, 125) einen geraden mittleren Körper aufweist, der von zwei umgebogenen Endsegmenten (129, 130) umrandet wird.

6. Rückenlehne (1, 100) eines Fahrzeugsitzes, welche einen Beschlag (2, 102), eine Polsterung (4, 104) und eine Aufhängungsmatte (3, 103) gemäß einem der Ansprüche 1 bis 5 umfasst, **dadurch gekennzeichnet, dass** die Aufhängungsmatte (103) zwischen einer Rückseite (131) der Polsterung (104) und dem Beschlag (102) eingefügt ist.

7. Rückenlehne nach Anspruch 6, **dadurch gekennzeichnet, dass** die Aufhängungsmatte (103) in die Polsterung (104) eingeformt ist, und dadurch, dass die aus der Polsterung (104) und der Aufhängungsmatte (103) bestehende Anordnung an dem Beschlag (102) befestigt ist.

8. Rückenlehne nach einem der Ansprüche 6 bis 7, **dadurch gekennzeichnet, dass** der Beschlag (102) der Rückenlehne (100) von zwei Seitenblechen (7, 8) umrandet wird, und dadurch, dass die zwei seitlichen Stützen (121, 122) dasselbe Profil wie die zwei Seitenbleche (7, 8) aufweisen, so dass die zwei seitlichen Stützen (121, 122) an den zwei Seitenblechen (7, 8) befestigt werden können und sich dabei eng an deren Form anpassen.

9. Rückenlehne nach einem der Ansprüche 6 bis 9, **dadurch gekennzeichnet, dass** die zwei seitlichen Stützen (121, 122) so ausgerichtet sind, dass sie ermöglichen, die Entfaltung eines Airbags zu führen, der in die Rückenlehne (100) integriert ist, und ermöglichen, aufblasbare Taschen zu stützen, die zur Einstellung seitlicher Halterungen der Polsterung (104) bestimmt sind.

10. Verfahren zur Montage einer Rückenlehne (100) nach einem der Ansprüche 1 bis 9, **dadurch gekennzeichnet, dass** es die folgenden Schritte umfasst:
- einen Schritt des Anformens mindestens eines Streifens (120, 123, 124, 125) einer Kunststofffolie an zwei parallele seitliche Stützen (121, 122), um eine Aufhängungsmatte (103) zu bilden,
- einen Schritt des Einformens der so erhaltenen Aufhängungsmatte (103) in eine Polsterung (104) der Rückenlehne (100),
- einen Schritt der Befestigung der Aufhängungsmatte (103) und der Polsterung (104) in einem Beschlag (102) der Rückenlehne (100).

## Claims

1. Suspension mat (3, 103) for a vehicle seat backrest (1, 100), comprising at least one strip (120, 123, 124, 125) of a plastic film, said strip being fastened to two lateral uprights (121, 122), said two lateral uprights (121, 122) each having a profile that is intended to fit the profile of a lateral plate (7, 8) of a frame (102) of said backrest (1, 100), **characterized in that** said strip (120, 123, 124, 125) is overmoulded into the two lateral uprights (121, 122).

2. Suspension mat according to Claim 1, **characterized in that** the two lateral uprights (121, 122) are parallel and symmetrical, and **in that** said at least one strip (120, 123, 124, 125) of plastic film connects each of said two lateral uprights (121, 122).

3. Suspension mat according to either one of Claims 1 and 2, **characterized in that** each lateral upright (121, 122) is embodied by a hollow, elongate component.

4. Suspension mat according to Claim 3, **characterized in that** each lateral upright (121, 122) is delimited by three walls (126, 127, 128), of which a first wall (126) is oriented towards the interior of the mat, of which a second wall (127) is oriented towards the exterior of said mat (103) and of which a third wall (128) connects said first wall (126) to said second wall (127), and **in that** said at least one strip (120, 123, 124, 125) of plastic film connects the first walls (126) of the two lateral uprights (121, 122).

5. Suspension mat according to any one of Claims 1 to 4, **characterized in that** the length of said at least one strip (120, 123, 124, 125) is greater than the distance separating the two lateral uprights (121, 122) such that said at least one strip (120, 123, 124, 125) has a rectilinear central body bordered by two bent end segments (129, 130).

6. Vehicle seat backrest (1, 100) comprising a frame (2, 102), padding (4, 104) and a suspension mat (3, 103) according to any one of Claims 1 to 5, **characterized in that** the suspension mat (103) is inserted between a rear face (131) of the padding (104) and the frame (102).

7. Backrest according to Claim 6, **characterized in that** the suspension mat (103) is overmoulded in the padding (104), and **in that** the assembly formed by said padding (104) and said suspension mat (103) is fastened to the frame (102).

8. Backrest according to either one of Claims 6 and 7, **characterized in that** the frame (102) of the backrest (100) is bordered by two lateral plates (7, 8), and **in that** the two lateral uprights (121, 122) have the same profile as that of the two lateral plates (7, 8), such that the two lateral uprights (121, 122) are fastened to said two lateral plates (7, 8), closely conforming to the shape thereof.

9. Backrest according to any one of Claims 6 to 9, **characterized in that** the two lateral uprights (121, 122) are oriented so as to guide the deployment of an airbag inserted into the backrest (100) and so as to support inflation pockets intended to adjust lateral supports of the padding (104).

10. Method for assembling a backrest (100) according to any one of Claims 1 to 9, **characterized in that** it comprises the following steps:
- a step of overmoulding at least one strip (120, 123, 124, 125) of a plastic film onto two parallel lateral uprights (121, 122) in order to form a suspension mat (103),
- a step of overmoulding the suspension mat (103) thus obtained in padding (104) of the backrest (100),
- a step of fastening said suspension mat (103) and said padding (104) in a frame (102) of said backrest (100) .
